# EUROPEAN PATENT APPLICATION

(11) **EP 4 733 259 A1**
(43) Date of publication of application: **29.04.2026**
(21) Application number: 24826000.2
(22) Date of filing: 21.06.2024
(51) Int. Cl.: C01D 15/08, B09B 3/10, B09B 3/80, C22B 3/22, C22B 3/24, C22B 3/44, C22B 7/00, C22B 26/12

(54) **PRODUCTION METHOD FOR LITHIUM CHEMICAL PRODUCT**

(30) Priority: 22.06.2023 JP 2023102787
(71) Applicant: Sojitz Institute of Innovative Technologies, Ltd., Tokyo 100-8691 (JP)
(72) Inventor: YOSHIZUKA, Kazuharu, Kitakyusyu-shi, Fukuoka 808-0137 (JP)
(74) Representative: Dr. Schön, Neymeyr & Partner Patentanwälte mbB
(86) International application number: PCT/JP2024/022508
(87) International publication number: WO 2024/262599

(57) **Abstract**

Provided is a new technique that, when recovering lithium from lithium-containing inorganic materials, makes it possible to reduce costs. The present invention produces a lithium chemical from lithium-containing inorganic material. In this production method, sulfuric acid in an amount of 2.5 mass% or more is mixed with the inorganic material at normal temperature, and the lithium in the inorganic material is extracted as lithium ion into liquid medium of inorganic material.

## Description

### Technical Field

The present invention relates to a method for producing a lithium chemical.

### Background Art

In recent years, due to the extensive use of lithium ion batteries in electric vehicles, the demand for lithium chemicals has increased remarkably, and there are concerns that lithium resources may become depleted in the future. Furthermore, since the countries possessing lithium deposits and those producing lithium chemicals are limited, geopolitical risks associated with the lithium supply have become a matter of concern for developed nations. Therefore, obtaining lithium without relying on these countries has become a global challenge, and many researchers are addressing the issue.

Boron chemicals such as borax are produced from ores containing boron. In this process, wastes in
the form of lumped mass or sludge (hereinafter referred to, for example, as "solid waste" (wastes)) are generated. The solid wastes may contain small amounts of lithium. Although the lithium content in the solid wastes is considerably lower than that in lithium ores, if the amount of solid wastes generated is large, the solid wastes can be expected to serve as a viable lithium resource. For example, in Turkey, the production of boron chemicals from boron ores is flourishing, and a large amount, over a million tons, of solid wastes have accumulated annually over many years. Therefore, techniques for producing lithium chemicals from solid wastes have been investigated. Typically, the lithium in solid wastes exists as a water-insoluble compound. Thus, techniques to convert the compound into a water-soluble compound and extract the water-soluble compound with water are well known.

For example, there is a technique known in which an aqueous sulfuric acid solution is mixed with a solid waste containing fluorine and lithium to extract lithium ions, and a calcium-containing alkaline agent is added to the extract to precipitate and remove the fluorine and sulfate ions from the extract, so as to obtain a purified lithium solution (see, for example, Patent Literature 1).

As another example of the technique,
there is a technique known in which hydrochloric acid, sulfuric acid, nitric acid, and another acid, or an acid which is the combination thereof is used with lithium-containing ores (clays) or solid wastes to obtain a lithium-containing extract (see, for example, Patent Literature 2).

In addition, as an example of the technique, Non-Patent Literature 1 discloses a technique in which ore (clay) collected from the Kirka deposit in Turkey is subjected to an acid treatment with 200 mL of a 0.25 mol/L aqueous HCl solution per 1 g of the ore to extract lithium from the ore (see, for example, Non-Patent Literature 1).

In addition, as another example of the technique, there is a technique known in which solid wastes generated through the production of boron chemicals using ore (clay) collected from the Kirka deposit in Turkey are calcined at 650°C to 800°C, and then sulfuric acid is added to the calcined solid wastes at a weight ratio of sulfuric acid to solid waste of 0.18 to 0.26 to extract lithium (see, for example, Non-Patent Literature 2).

### Citation List

### [Patent Literature]

[Patent Literature 1]
   International Publication No. WO 2022/085635
[Patent Literature 2]
   Japanese Translation of PCT International Application Tokuhyo No. 2021-514030

### [Non-patent Literature]

[Non-patent Literature 1]
   Won-Jong Lee et al., J. Miner. Soc. Korea, 29(4), 167-177 (2016)
[Non-patent Literature 2]
   Abdullah Obut et al., Physicochem. Probl. Miner. Process., 58(4), 149635 (2022)

### Summary of Invention

### Technical Problem

Conventionally, various studies have thus been conducted on recovering lithium from inorganic materials containing lithium, such as solid wastes. The inventor of the present invention also obtained solid wastes generated during the production of boron chemicals and performed replications of lithium extraction with reference to the above literature (as described in Examples and Comparative Examples) in order to produce lithium chemicals from the solid wastes.

For example, the invention of the above Patent Literature 1 addresses the problem of inhibited lithium recovery due to the generation of water-insoluble lithium fluoride resulting from, as the raw material, waste which is derived from discarded lithium batteries that contain a high amount of fluorine. However, since the solid wastes obtained by the inventor of the present invention do not contain any fluorine, applying Patent Literature 1 is not considered.

Also, the above Patent Literature 2 discloses an invention in which lithium ion is concentrated from a lithium ion-containing solution by using an ion-exchange resin. Although paragraph [0308] of Patent Literature 2 suggests extracting lithium from wastes using acid, neither the type of acid, the amount used, nor a specific process is indicated. Since the lithium content in solid wastes is generally low, the lithium extraction efficiency or the acid disposal cost may significantly affect the price of the lithium chemicals, depending on the type and amount of acid used. Therefore, the invention of Patent Literature 2 does not provide motivation to use solid wastes as a raw material for lithium chemicals and specify the type and amount of acid used.

Furthermore, in the invention of the above Non-Patent Literature 1, the lithium content in the raw ore is approximately three times higher (approximately 0.18%) than that in the solid wastes obtained by the inventor of the present invention. Thus, if a large amount of acid is used as disclosed in Non-Patent Literature 1, the recovery cost per unit weight of the recovered lithium will be high. Therefore, from a commercial standpoint, the invention of Non-Patent Literature 1 is not useful as a reference. In addition, the composition of the raw ore is significantly different from that of the solid wastes in the present embodiment. Therefore, the invention of Non-Patent Literature 1 also does not provide motivation to use solid wastes as a raw material for lithium chemicals and specify the type and amount of acid used.

In addition, in the invention of the above Non-Patent Literature 2, the raw material is subjected to calcination. However, in the raw material obtained by the inventor of the present invention, the efficiency of extraction of lithium is reduced by calcination. Although the reason for this is unclear, it is conceivable that the effect of calcination on the raw material in lithium extraction varies depending on the chemical composition of the raw material, since the chemical composition of the raw material in the invention of Non-Patent Literature 2 is different from that of the
solid wastes in the present embodiment.

The above conventional techniques thus generally have cost issues. That is, when a large amount of acid is used for extracting lithium from solid wastes with low lithium content, the cost of the acid per unit weight of the recovered lithium as well as other processing costs become high. As a result, profits may be significantly reduced, and in some cases, the process may even become unprofitable. In addition, a method including a calcination step incurs an additional calcination cost. Furthermore, the above conventional techniques include a technique specific to the composition of the solid wastes, and, depending on the chemical composition of the solid wastes, a desired lithium recovery rate may not be achieved.

An object is to provide an extraction technique that reduces the recovery cost per unit weight of recovered lithium when recovering lithium from inorganic materials containing the lithium, such as solid wastes generated during the production of boron chemicals, which have been obtained by the inventor of the present invention.

### Solution to Problem

In order to attain the above object, lithium chemical production method in accordance with an
aspect of the present invention is a method for producing a lithium chemical from inorganic materials containing lithium, the method including a step of mixing sulfuric acid with the inorganic materials at normal temperature in an amount of 2.5 mass% or more with respect to the inorganic material to extract the lithium from the inorganic material into a liquid medium.

In order to attain the above object, lithium chemical production method in accordance with an aspect of the present invention is a method for producing a lithium chemical from a solid waste generated when a boron chemical is produced from boron-containing ores, the method including, in the order stated, a step of mixing sulfuric acid with the solid waste at normal temperature in an amount of 25 mass% to 35 mass% with respect to the solid waste to extract lithium as lithium ion from the solid waste and adding a liquid medium (such as water) thereto to obtain a liquid medium containing lithium.

In order to attain the above object, lithium chemical production method in accordance with an aspect of the present invention is a method for producing a lithium chemical from solid waste generated when a boron chemical is produced from boron-containing ores,
the method including, in the order stated, a step of pulverizing the solid waste in a form of lumped mass, a step of mixing water with the solid waste which has been pulverized, so as to moisten the solid waste with the water, a step of mixing sulfuric acid with the solid waste at normal temperature in an amount of 25 mass% to 35 mass% with respect to the solid waste to extract lithium as lithium ion from the solid waste and adding liquid medium (such as water) thereto to obtain liquid medium containing lithium, a step of removing a solid product from liquid medium containing lithium ion, a step of bringing liquid medium after the removing of the solid product into contact with an adsorbent to adsorb lithium ion in the liquid medium to the adsorbent, a step of bringing acid into contact with the adsorbent to which lithium ion have been adsorbed, so as to elute lithium ion from the adsorbent to obtain an eluent, a step of adding alkali to the eluent so as to set the eluent to a pH of 6 or higher, a step of concentrating the eluent which has been adjusted to a pH of 6 or higher, a step of adding a soluble carbonate compound to the concentrated liquid to deposit lithium carbonate, a step of separating, from the concentrated liquid, particles of the lithium carbonate which has been deposited and washing the particles of the lithium carbonate with a saturated aqueous lithium carbonate solution, and a step of drying the particles of the lithium carbonate which have been
washed.

### Advantageous Effects of Invention

An aspect of the present invention makes it possible to provide a new technique that, when recovering lithium from lithium-containing inorganic materials such as solid wastes, can further reduce the recovery cost per unit weight of lithium recovered.

### Brief Description of Drawings

Figure 1 is a flowchart showing a flow of steps in one aspect of lithium chemical production method in accordance with an embodiment of the present invention.
Figure 2 is a view showing an X-ray diffraction spectrum of solid wastes used in Example 1 of the present invention.
Figure 3 is a view showing the relationship between the amount of lithium extract solution and the mass ratio of sulfuric acid added to a pulverized material of the solid wastes used in Example 1 of the present invention.
Figure 4 is a view showing the relationship between the amount of lithium extract solution and the amounts of moistening water and sulfuric acid added to a pulverized material of solid wastes used in Examples 2 through 11 of the present invention.
Figure 5 is a view showing the relationship between the amount of lithium extract solution and the amounts of moistening water and sulfuric acid added to a pulverized material of solid wastes used in Example 12 of the present invention.

### Description of Embodiments

In the present specification, the phrase "A to B" denotes a range "not less than A and not more than B" that includes the numerical values at both ends, unless otherwise specifically indicated. In addition, unless otherwise specifically indicated, the unit of concentration refers to a mass-based unit.

Lithium chemical production method in accordance with an embodiment of the present invention is a method for producing a lithium chemical from inorganic materials containing lithium. As one embodiment of the present invention, a technique for producing a lithium chemical of a purity usable in lithium ion battery production from industrial waste (solid) will be discussed. This technique mainly includes (1) a technique for extracting lithium contained in the waste into a solution, (2) a technique for precipitating impurity ions other than
lithium ion in the solution, (3) a technique for adsorbing and desorbing the solution containing lithium ion by using an inorganic ion exchanger with high lithium selectivity, and (4) a technique for obtaining purified lithium carbonate from the lithium ion solution after the desorption. It should be noted that "boron chemical" refers to a composition in which boron is the main component. Examples of the boron chemical include boron and compounds containing boron. More specifically, the boron chemical, for example, is borax, as mentioned earlier.

### [Lithium chemical]

"Lithium chemical" refers to a composition in which lithium is the main component. Examples of the lithium chemical include lithium and compounds containing lithium. More specifically, the lithium chemical is lithium carbonate or lithium hydroxide.

### [Inorganic matter containing lithium]

An "inorganic material containing lithium" need only contain lithium, and the composition thereof is not limited. For example, a lithium-containing inorganic material may contain metals other than lithium, may be an inorganic oxide, or may be an inorganic material containing elements other than oxygen, such as nitrogen. In addition,
a lithium-containing inorganic material may be a natural substance, an artificial substance, or even waste generated after the use thereof. Furthermore, a lithium-containing inorganic material need only be in a state in which lithium can be extracted using sulfuric acid. For example, from the viewpoint of enhancing contact with sulfuric acid, the inorganic material may be a pulverized material or a powder thereof. Examples of the lithium-containing inorganic material include solid wastes below.

### [Solid waste]

"Solid waste" (wastes) refers to a solid or sludge-like waste discharged as a residue when a boron chemical is produced from boron-containing minerals. Examples of the minerals include probertite, colemanite, meyerhofferite, inyoite, pandermite, and datolite.

Examples of the solid waste include a solid waste (wastes) produced at a boron chemical manufacturing plant in Kirka, Turkey, as will be discussed in later Examples. Lithium is widely distributed throughout solid wastes. The lithium content of the solid waste is approximately several tens of ppm to several thousands of ppm (metal-Li-mg/wastes-kg). The lithium content of the solid waste used in Examples is approximately 800 ppm.

In a boron chemical manufacturing plant, if the boron ore (clay) used as the raw material for boron chemicals differs, or if the operation conditions of the boron chemical production line vary, the composition and chemical reactivity of the generated solid wastes will not be the same. It is preferable that the solid waste used in the present embodiment exhibits reactivity that is suitable for kneading with sulfuric acid discussed later. The reactivity can be confirmed by a kneading experiment with sulfuric acid. Moreover, a solid waste having a composition substantially identical to that of a solid waste exhibiting suitable reactivity can also be confirmed as a preferable solid waste in the present embodiment. The composition of the solid waste can be confirmed by measurement using X-ray diffractometry (XRD) or XPS.

If the composition (and the crystalline state thereof) of a mixture is identical, the XRD spectrum will be identical, and the peak position will also be identical. However, if the shape of the crystal differs, the reflective area of the crystal faces will change accordingly, resulting in variations in peak intensities. Once the chemical composition (crystal) is determined, the peak value (2θ) is fixed. However, for various reasons such as the X-ray source or the
light receiving slit not having an infinitesimally small width, the peak values are accompanied by an error of ±0.2°.

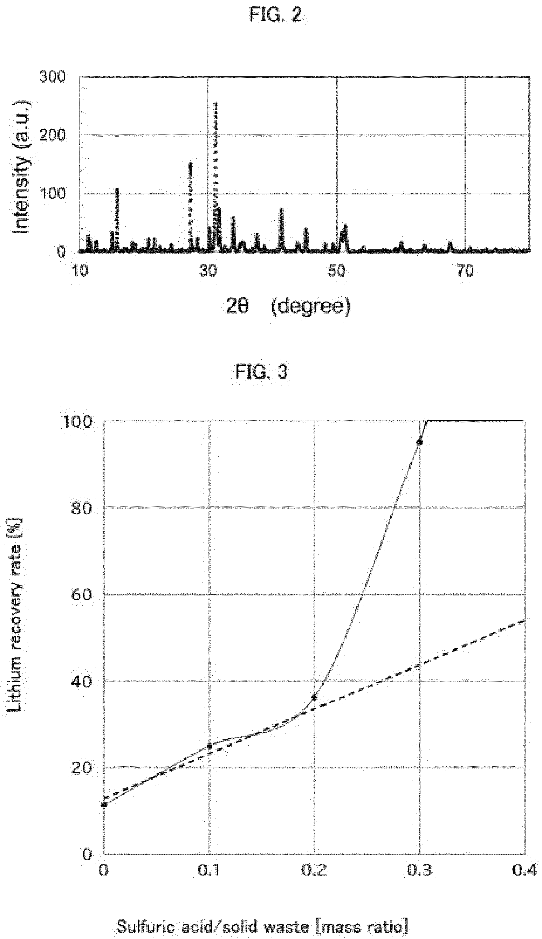

Whether or not the solid waste in the present embodiment is suitable can be determined by whether or not the XRD spectrum is substantially identical to that of a suitable solid waste. For example, the solid wastes used in Examples are examples of a suitable solid waste in the present embodiment. The peaks in the XRD spectrum ranked in intensity up to the 12th peak shown in Table 2 and Fig. 2 in Examples can serve as criteria for determining a suitable solid waste. If three or more, preferably seven or more, of the 12 peaks of the XRD spectrum match within an error of ±0.2° from the peak position 20, the solid waste can be recognized as applicable to the present embodiment. In the present embodiment, a solid waste with a greater number of matching peaks is more preferable. From the viewpoint of lithium recovery efficiency and cost reduction, it is suitable that the solid waste in the present embodiment is the solid waste obtained in Kirka and used in Examples discussed later.

It is preferable that the elemental composition of the solid waste contains calcium in the highest amount, among the elements with an atomic number of 12 or higher. As discussed later, as a result of kneading
with sulfuric acid, the calcium in the solid waste becomes insoluble as calcium sulfate and can be removed from a liquid medium by filtration. Therefore, even if a subsequent step aimed at lithium recovery includes a step in which calcium ion could act as an inhibitory factor, the effect of calcium ion in the step can be substantially suppressed. For example, if a manganese oxide-based adsorbent is used in the adsorption step discussed later, calcium ion tends to act as an interfering ion. However, in the present embodiment in which the solid waste is treated with sulfuric acid, the calcium ion in the liquid medium is precipitated as calcium carbonate, and most of the calcium carbonate can be removed from the liquid medium by liquid-solid separation. Thus, even if a manganese oxide-based adsorbent is used in the adsorption step, the performance of the adsorbent can be sufficiently manifested.

### [Extraction step]

In the lithium chemical production method in accordance with an embodiment of the present invention, sulfuric acid is mixed with a solid waste at normal temperature, a resultant product is kneaded, and lithium in the solid waste is extracted as lithium ion into a liquid medium. Hereinafter, this step of the extraction will be referred to as "extraction step".

The amount of sulfuric acid added in the extraction step is relative to the dried and pulverized material. In addition, "normal temperature" may be the temperature of the environment at the location where the present embodiment is carried out, for example, 0°C to 40°C. Furthermore, "liquid medium" refers to a liquid in which the lithium ions extracted from the solid waste can exist, such as a liquid primarily composed of water. Examples of the liquid medium include water, aqueous solution of salts, and aqueous solutions of water-soluble organic compounds (such as alcohols).

In the extraction step, if too little sulfuric acid is added, the recovery efficiency of lithium is low, whereas if too much is added, the effect of the recovery efficiency of lithium plateaus and the costs related to the sulfuric acid and subsequent treatment increase, which is unfavorable from the viewpoint of cost. Moreover, as demonstrated in Examples discussed later, in the extraction step, the rate of lithium extraction into the liquid medium depends on the amount of sulfuric acid added, and when the weight ratio of sulfuric acid to solid waste reaches and exceeds a certain value (critical point), the recovery rate of lithium increases remarkably. From the viewpoint of sufficiently enhancing the lithium recovery efficiency, the amount of sulfuric acid added in the extraction step is preferably 25 mass% or
more, more preferably more than 26 mass%, and still more preferably 28 mass% or more. Moreover, from the viewpoint of suppressing the increase in costs associated with sulfuric acid, the sulfuric acid concentration in the liquid medium in the extraction step is preferably 35 mass% or less, more preferably 34 mass% or less, and still more preferably 33 mass% or less.

For the sulfuric acid in the extraction step, concentrated sulfuric acid can be suitably used. Concentrated sulfuric acid is inexpensive and is thus advantageous compared to other acids. The concentration of the concentrated sulfuric acid is preferably 85% to 98%, more preferably 90% to 98%, and still more preferably 94% to 98%.

The use of sulfuric acid in the extraction step also brings the following advantages. That is, when sulfuric acid is added to a solid waste, the calcium carbonate in the solid waste foams, neutralizes the sulfuric acid, and is precipitated as calcium sulfate. In this reaction, a substantially neutral solution is obtained. Therefore, in the present embodiment, the sulfuric acid concentration in the liquid medium can be determined in view of such neutralization by the reaction with calcium. As a result, it is possible to suppress the decrease in the pH of the liquid medium obtained in
the extraction step. This makes it possible to carry out the subsequent adsorption of lithium ions without adjusting the pH of liquid medium.

In the present embodiment, acids other than sulfuric acid may be used in combination in the extraction step, provided that the effects of the present invention can be obtained. Examples of the other acids include hydrochloric acid and nitric acid. In the present embodiment, from the viewpoint of sufficiently manifesting the above effects of sulfuric acid, it is preferable that the acid used in the extraction step is substantially only sulfuric acid. For example, if hydrochloric acid is used in the extraction step, the pH of the liquid medium tends to be more acidic (lower) compared to case where only sulfuric acid is used. Therefore, further pH adjustment may be required in the subsequent adsorption of lithium ion to further increase the pH of the liquid medium.

### [Other steps]

An embodiment of the present invention may further include steps other than the above extraction step, provided that the effects of the present invention can be obtained. For example, the production method of a lithium chemical in accordance with the present embodiment
may further include, before the extraction step, that is, before mixing sulfuric acid, a step (moistening step) of moistening the solid waste with water. In the moistening step, the solid waste may be immersed in water, or water may be directly added to and stirred with the solid waste. By moistening, for example, the pulverized solid waste exhibits smooth flowability. This makes it easy for the sulfuric acid and the pulverized solid waste to be uniformly mixed. From the viewpoint of enhancing contact with water, it is preferable that the solid waste is sufficiently pulverized. Further including the moistening step is preferable from the viewpoint of enhancing the contact between the sulfuric acid and the solid waste in the extraction step.

The lithium chemical production method in accordance with the present embodiment may further include a step (liquid medium separation step) of separating the liquid medium from the solid product after the extraction of the lithium ions. The term "solid product" refers to the solid waste after being mixed with sulfuric acid in the extraction step or to the insoluble component produced in the extraction step. For example, if the solid waste contains calcium, the insoluble component is calcium sulfate. The liquid medium separation step can be carried out by any known liquid-solid separation method. Examples of such a method
include filtration, decantation, and centrifugation. From the viewpoint of enhancing the quality (purity) of a resulting lithium chemical, the liquid medium separation step preferably includes a plurality of methods.

In addition, the production method of a lithium chemical in accordance with the present embodiment may further include a step (lithium ion adsorption step) of contacting, with an adsorbent, the liquid medium containing lithium after the liquid medium separation step, that is, after the removal of the solid product, so as to cause the adsorbent to adsorb the lithium ions present in the liquid medium. The lithium ion adsorption step can be carried out using any known adsorbent having the capacity to adsorb lithium ion. Examples of the adsorbent include a manganese oxide-based ion adsorbent. For example, the manganese oxide-based ion adsorbent may be a single-phase manganese oxide adsorbent having a porous crystalline structure with a defect of the diameter of lithium ion. The contact between the adsorbent and the liquid medium may be achieved by causing the particles of the adsorbent to flow in the liquid medium, or by distributing the liquid medium through a fixed bed of the adsorbent. From the viewpoint of performing the adsorption and subsequent desorption of lithium ion stably and easily, it is preferable to distribute the liquid
medium through a fixed bed of the adsorbent to bring the adsorbent and the liquid medium into contact. From this viewpoint, it is preferable that the adsorbent is a manganese oxide-based ion adsorbent that has been shaped into pellets, and that the adsorption step of lithium ion is a step of distributing the liquid medium containing lithium through a pipe filled with the adsorbent.

In particular, when the above liquid medium separation step is included, the calcium ion that interfere with the adsorption are removed as a solid component (calcium sulfate) from the liquid medium to be subjected to the lithium-ion adsorption step. Thus, the adsorption performance of lithium ion with the manganese oxide-based ion adsorbent can be sufficiently manifested. In addition, when the above liquid medium separation step is included, the sulfuric acid is consumed in the fixation of calcium ion (generation of calcium sulfate). Thus, the decrease in the pH of the liquid medium due to the sulfuric acid can be suppressed. Therefore, it becomes possible to omit the step of adjusting the pH of the liquid medium after the liquid medium separation step and proceed directly from the liquid medium separation step to the adsorption step of lithium ion.

In addition, the production method of
a lithium chemical in accordance with the present embodiment may further include a step (elution step of lithium ion) of bringing acid into contact with the adsorbent on which lithium ion are adsorbed, so as to exchange the adsorbed lithium ion with hydrogen ion, so as to elute the lithium ion from the adsorbent. Further including the elution step of lithium ion is preferable from the viewpoint of recovering lithium ion from the adsorbent with a simple operation. The acid used in the elution step of lithium ion need only be acid that elutes lithium ion from the adsorbent on which lithium ion are adsorbed. Examples thereof include hydrochloric acid, sulfuric acid, and nitric acid. The acid concentration need only be sufficient for lithium ion to be eluted from the adsorbent, and may be approximately a pH of 0 (1 mol/L in the case of hydrochloric acid).

In addition, in the production method of a lithium chemical in accordance with the present embodiment, the acidic eluent obtained is neutralized with an alkaline agent. This is suitable from the viewpoint of preventing corrosion of the apparatuses in subsequent stages. The pH of the neutralized liquid medium is preferably 5 or more, and more preferably 6 or more. This is because the next step is a concentration step, and if acid remains, the acidity will increase upon concentration, and it is
therefore necessary to sufficiently remove the acid.

In the production method of a lithium chemical in accordance with the present embodiment, when an alkaline agent is added to the obtained acidic eluent, adding the alkaline agent up to a pH of 10, for example, causes manganese or iron which is contained in a trace amount to be deposited; removing the deposited manganese or iron makes it possible to further enhance the purity of lithium. After removing the deposit, the liquid property is adjusted to a pH of 6 to 8, and then the process can proceed to the concentration step.

In addition, the production method of a lithium chemical in accordance with the present embodiment may further include a step (concentration step) of concentrating the eluent. The concentration step can be carried out using a known apparatus that is capable of concentrating the eluent. In the concentration step, from the viewpoint of energy efficiency and running costs, it is suitable to use a known evaporation concentration apparatus such as an evaporation concentration can.

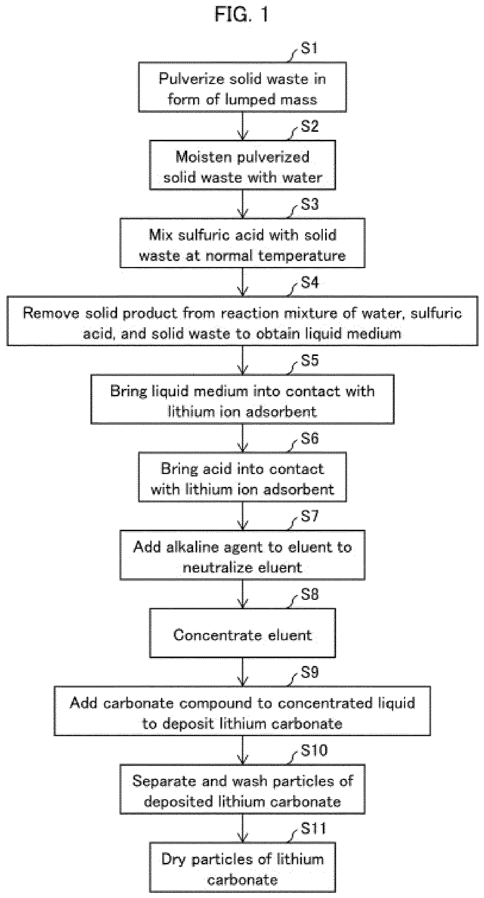

An aspect of the present embodiment will be described in more detail below. Figure 1 is a flowchart
showing a flow of steps in one aspect of the production method of a lithium chemical in accordance with an embodiment of the present invention.

First, in step S1, a solid waste in the form of lumped mass is pulverized. The solid waste is pulverized using a known pulverizing apparatus. If the solid waste is in the form of sludge, the solid waste does not need to be pulverized.

Next, in step S2, water is mixed with the pulverized solid waste to moisten the solid waste with water. For example, 1 kg of water is added to and kneaded with 1 kg of the pulverized solid waste to form a slurry. In this way, a water slurry of the solid waste is prepared.

Next, in step S3, sulfuric acid is mixed with the solid waste at normal temperature. For example, for the dry solid waste, 0.25 kg to 0.35 kg of sulfuric acid is gradually added while further kneading the water slurry. In this way, the lithium in the solid waste is extracted as lithium ion into the liquid medium.

Next, in step S4, a solid product is removed from the water slurry (a reaction mixture of water, sulfuric acid, and solid waste) after the extraction of lithium
ion. For example, once the foaming in the water slurry to which the sulfuric acid was added in step S3 subsides, additional water (or liquid medium) is added. After the solid product has been precipitated, the supernatant liquid is collected. Alternatively, once the foaming subsides, filtration is performed to separate the lithium-extract solution and the solid product. In this way, the liquid medium is obtained from the water slurry. In step S4, water may be added and then the mixture may be filtered so that lithium concentration in the lithium extract solution becomes suitable for the next adsorption step of lithium ion (in Examples, approximately 200 ppm).

It should be noted here that the pH of the liquid medium is measured, and if the pH is at or higher than the minimum pH suitable for using a lithium-ion adsorbent (for example, a pH of 6 or higher in the case of the adsorbent used in Examples), the process proceeds to the next adsorption step of lithium ion. If the pH of the liquid medium is less than the minimum value in the recommended pH range for using the lithium-ion adsorbent, the lithium ion in the lithium-ion adsorbent may dissolve and the adsorption capacity of the adsorbent may decrease in the next step. If the pH of the liquid medium is lower than the pH range suitable for using the lithium-ion adsorbent, the conditions of
step S3 may be re-set so that a smaller amount of sulfuric acid is added in step S3 to raise the pH of the liquid medium, or the pH of the liquid medium may be adjusted by adding an alkaline agent to the liquid medium.

Next, in step S5, the liquid medium after removal of the solid product is brought into contact with the lithium ion adsorbent. Step S5 is, for example, a step of passing the liquid medium through an adsorption column filled with the lithium-ion adsorbent. In the adsorption column, the liquid medium may be passed from top to bottom or from bottom to top. In addition, the number of times the liquid medium is passed through the adsorption column is not particularly limited, and the passing of the liquid medium may be repeated until lithium ion is detected in the liquid discharged from the adsorption column.

The lithium-ion adsorbent can be, for example, a manganese oxide-based adsorbent, such as the lithium-ion adsorbent disclosed in International Publication No. WO 2011/058841. From the viewpoint of preventing the adsorbent from flowing out of the cylinder during liquid passage, it is suitable to use a lithium ion adsorbent shaped into pellets and filled in the cylinder. The manganese oxide-based lithium-ion adsorbent can, for example, adsorb and
desorb approximately 15 g to 20 g of lithium ions per 1 kg. As a result of step S5of the lithium ion in the liquid medium are adsorbed onto the lithium-ion adsorbent. In step S5, the lithium-ion adsorbent adsorbs only lithium ion. Therefore, for a while after the liquid medium starts being supplied to the adsorption column, the liquid discharged from the adsorption column contains substantially no lithium. The end point of step S5 can be determined by detecting lithium ion in the liquid discharged from the adsorption column.

Next, in step S6, acid is brought into contact with the lithium-ion adsorbent that has adsorbed lithium ion. For example, acid is supplied to and passed through the adsorption column. For example, approximately 1 mol/L (approximately 4%) of hydrochloric acid is passed through the adsorption column. The direction in which the acid is supplied to the adsorption column may be the same as the direction in which the liquid medium was supplied to the adsorption column in step S5 (for example, from top to bottom), or may be the reverse direction (for example, from bottom to top). The former is suitable from the viewpoint of further simplifying the piping around the adsorption column, while the latter is suitable from the viewpoint of enhancing the contact between the lithium-ion adsorbent and the acid. The lithium ion in the adsorbent is exchanged with hydrogen ion
in the hydrochloric acid, and a solution (eluent) containing lithium chloride and hydrochloric acid is discharged from the adsorption column. During discharge, the discharged liquid is collected in a tank. The lithium ion concentration in the lithium-containing eluent is approximately 1000 ppm to 2000 ppm in the tank.

Next, in step S7, alkali is added to the obtained eluent to neutralize the eluent. The eluent is strongly acidic and may cause corrosion of the equipment in the subsequent steps. Therefore, it is preferable to add an alkaline agent such as sodium hydroxide or potassium hydroxide to the eluent to neutralize the eluent as appropriate. For example, sodium hydroxide is added to the eluent with stirring until the pH of the eluent reaches 6 or higher. By sufficiently neutralizing in this manner, corrosion of the equipment in the subsequent stages is prevented. If the neutralization is insufficient, the acidity may increase upon concentration. Thus, the pH is set to 6 or higher.

Next, in step S8, the eluent is concentrated. The concentration need only be performed by a method that removes the water-based liquid medium mentioned above from the eluent, whether under pressure, under normal pressure, or under reduced pressure. For example,
the concentration of the eluent under normal pressure using a stainless steel evaporation concentration can may be employed. The concentration is performed until the lithium ion concentration reaches 15,000 ppm or higher. The reason for concentrating is to increase the amount of lithium carbonate that will be precipitated in the next step. As a result of step S8, a concentrated liquid containing high concentration of lithium ion is obtained.

Next, in step S9, a carbonate compound is added to the obtained concentrated liquid to deposit lithium carbonate. The carbonate compound need only be a compound that substantially reacts only with lithium ions in the concentrated liquid to generate lithium carbonate. Examples of the carbonate compound include sodium carbonate, carbon dioxide (air may be cited as an example), and potassium carbonate. For example, approximately 210 g of sodium carbonate is added to 1 L of the concentrated liquid, and the resultant product is stirred and allowed to stand so that lithium carbonate may be precipitated. In step S9, among the metal ions in the concentrated liquid, lithium ion is deposited as lithium carbonate, while other metal ions (such as sodium and calcium ions) remain dissolved in the concentrated liquid. Lithium carbonate is an example of the lithium chemical in the present embodiment. Therefore, a
lithium chemical having sufficiently high purity is obtained in step S9.

Next, in step S10, the deposited lithium carbonate particles are separated from the concentrated liquid and washed with a saturated aqueous lithium carbonate solution. The separation of the lithium carbonate particles from the concentrated liquid can be achieved by any appropriate method selected from known liquid-solid separation methods, such as filtration.

The washing of the filtered particles is performed by washing with a saturated aqueous lithium carbonate solution that contains no impurities. Such a washing method causes the solution containing impurities between the precipitated lithium carbonate particles to flow out and causes impurities adhering to the surfaces of the precipitated lithium carbonate particles to dissolve in the saturated aqueous lithium carbonate solution and be removed. Since the washing liquid is a saturated aqueous lithium carbonate solution, the lithium carbonate particles do not dissolve. However, other impurities dissolve in the saturated aqueous lithium carbonate solution or are washed away. Therefore, the reduction loss due to the purification in step S10 is substantially prevented, and a lithium chemical of high purity is obtained.
In this way, the lithium carbonate is purified. The saturated aqueous lithium carbonate solution may be, for example, the supernatant liquid of water in which an excess amount of lithium carbonate has been added, and may be shared across different batches in the production of lithium chemicals.

Next, in step S11, the washed lithium carbonate particles are dried. In this way, a lithium chemical of high purity is obtained from the solid waste. The lithium carbonate may be further converted into lithium hydroxide to be used as a lithium chemical. Alternatively, the particle drying step in step S11 may be omitted, and the process may proceed to a step of chemical conversion of the lithium hydroxide.

In this manner, in the present embodiment, lithium chemicals are produced from solid wastes that are generated during the production of boron chemicals from boron-containing ores. With the method in accordance with the present embodiment, lithium can be recovered from the solid wastes at a lower operating expenditure (OPEX) and with a lower CO₂-LCA (life cycle assessment). For example, the lithium chemical produced by the present embodiment can have sufficiently low concentrations of components such as manganese, aluminum, and boron, which are undesirable as raw materials for lithium-ion batteries, and
the purity of lithium carbonate can be 99.7% or higher. Since the purity of lithium carbonate of the grade for a raw material for lithium-ion batteries is 99.5% or higher, the lithium carbonate produced by the present embodiment can be used as a raw material for lithium-ion batteries.

### [Variations]

In the process shown in Fig. 1, additional steps may be inserted between the respective steps, provided that the relative order of the steps is not altered. However, calcination is excluded because calcination remarkably increases the recovery cost. For example, a step of washing the lithium-ion adsorbent may be further included before step S6 (of eluting lithium ions by bringing the adsorbent and acid into contact). Into the process shown in Fig. 1, a pH adjustment step, a dilution step, a filtration step, a washing step, a measurement step, or a storage step may be further inserted.

In addition, in the process shown in Fig. 1, in the neutralization step carried out after the elution step, an alkaline agent may be added until the liquid property reaches approximately a pH of 10. In doing so, manganese or iron is deposited and precipitated. Removing the manganese or iron makes it possible to obtain a lithium chemical of higher purity. After the manganese or iron is
removed, the liquid property is adjusted to a pH of 6 or higher, and then the process proceeds to the concentration step.

In addition, in an embodiment of the present invention, lithium can be recovered from the liquid medium in the extraction step by a method other than the above adsorption method. Examples of such other methods include a method for using a separation membrane made of an ion conductor to separate lithium ions from the liquid medium. In such an alternative method, steps such as pH adjustment and filtration may be further included as necessary.

In an embodiment of the present invention, calcination is unnecessary. Therefore, the lithium chemical production method in accordance with an embodiment of the present invention does not need to include a step of calcining the solid wastes. Omitting such a calcination step is advantageous in reducing the costs associated with heating for calcination and is advantageous in reducing CO₂ in LCA for the lithium chemical and further products that use the lithium chemical.

The lithium chemical production method in accordance with an embodiment of the present invention may include a step of moistening the inorganic material with water in an amount of 100 mass% or less with respect
to the inorganic material, and a step of mixing sulfuric acid with the inorganic material at normal temperature in an amount of 2.5 mass% to 35 mass% with respect to the inorganic material to extract the lithium from the inorganic material into a liquid medium. In this embodiment, the steps other than the extraction step may be carried out as in the steps in the above embodiment.

In the extraction step, if the amount of water used to moisten the inorganic material is low, the water content of the moistened inorganic material may be too low for the lithium extraction effect by moistening to be fully manifested, whereas if the amount of water is high, the concentration of sulfuric acid acting on the inorganic material may become low, resulting in a low amount of lithium being extracted from the inorganic material. From the viewpoint of sufficiently enhancing lithium extraction by sulfuric acid, the amount of water used to moisten the inorganic material in the extraction step is preferably 20 mass% or more with respect to the inorganic material, may be 30 mass% or more with respect to the inorganic material, and may be 40 mass% or more with respect to the inorganic material. From the same viewpoint, the amount of water used to moisten the inorganic material in the extraction step is preferably 100 mass% or less with respect to the inorganic material, may be
80 mass% or less with respect to the inorganic material, and may be 60 mass% or less with respect to the inorganic material.

In addition, if the sulfuric acid concentration in the liquid medium in the extraction step is low, the amount of lithium extracted from the inorganic material may be small, whereas if the sulfuric acid concentration is high, the effect of lithium extraction may plateau and the burden of treating the residual sulfuric acid in the wastewater may become high. From the viewpoint of sufficiently extracting lithium from the inorganic material, the sulfuric acid concentration in the extraction step is preferably more than 7 mass% and more preferably 8 mass% or more, with respect to the inorganic material. In addition, from the viewpoint of reducing the burden on waste liquid treatment, the sulfuric acid concentration in the extraction step is preferably 13 mass% or less and more preferably 12 mass% or less, with respect to the inorganic material.

An embodiment including the above preferable extraction step can be applied to various lithium-containing inorganic materials. Regardless of the type of lithium-containing inorganic material, lithium can be extracted more efficiently than in lithium extraction by the
previously discussed embodiment. Examples of the lithium-containing inorganic material applicable to an embodiment including the above preferable extraction step include aforementioned solid wastes and lithium ores. Since it is possible to extract lithium at higher efficiency, the inorganic material is more suitably solid wastes generated during the production of a boron chemical from boron-containing ores.

### [Main working effect]

As discussed above, the lithium chemical production method in accordance with an aspect of the present embodiment can include (1) a step of extracting lithium ion from a solid waste by an operation of mixing and kneading sulfuric acid in an amount of 25 mass% to 35 mass% with respect to the solid waste without heating or calcination and (2) a step of obtaining, from the extract solution, a high-purity lithium-containing aqueous solution using a manganese oxide-based lithium-ion adsorbent. With the present embodiment, lithium chemicals can be produced, at lower OPEX and lower CO₂ in LCA, from solid wastes generated in the production of boron chemicals.

As a method for taking out only the lithium from the aqueous solution containing the extracted lithium, the present embodiment employs a lithium-ion
adsorbent that has high lithium selectivity. The synergistic effect achieved by combining the acquisition of the above lithium-containing extract solution and the lithium-ion adsorbent can further reduce the production cost of the lithium chemical. Examples of the synergistic effect include: the possibility of proceeding directly to the adsorption step of lithium ion without undergoing, for example, a step of adjusting the pH of the filtrate (liquid medium) after the extraction; and the possibility of almost completely removing cations other than lithium from the above eluent by the alkalization step (variation).

More specifically, in the present embodiment, by adding sulfuric acid in the range of 25 mass% to 35 mass% to the solid waste, a small amount of sulfuric acid can be reacted without waste, so that it is possible to recover lithium at a high yield. When the amount of sulfuric acid used is adjusted within the range so that the pH becomes suitable for the use of the lithium-ion adsorbent, the neutralization step before the adsorption step can be unnecessary. That is, in the present embodiment, it is possible to carry out the adsorption step of lithium ion directly after the above liquid medium separation step (without undergoing another step such as pH adjustment). The present embodiment is thus advantageous from the viewpoint of reducing costs
through reducing steps.

In addition, in the present embodiment, by using an ion exchange adsorbent that is selective only for lithium, the accompanying presence of a plurality of water-soluble, unnecessary ions can be prevented. This makes it possible to omit a plurality of precipitation separate steps. Thus, it is possible to considerably reduce the costs of reagents.

In addition, in the present embodiment, there is no need to calcine the solid wastes at a high temperature. It is also unnecessary to perform heating when the solid wastes and the sulfuric acid are reacted. Thus, the costs associated with such heating are unnecessary, and, compared to methods requiring such heating, total carbon dioxide emissions (LCA) in the production steps can be reduced.

Furthermore, in the present embodiment, if the solid wastes contain calcium, the residue after lithium ion is taken out mainly becomes gypsum. Thus, the disposal costs are low or, if the residue is recycled, profit can be generated from sales.

In particular, in an embodiment of the present invention, after a lithium-containing
inorganic material is moistened with water in an amount equal to or less than the lithium-containing inorganic material, sulfuric acid is used to extract lithium from the lithium-containing inorganic material at normal temperature. This makes it possible to extract lithium at a higher extraction rate. Thus, although the above solid waste is preferably used as a lithium-containing inorganic material even in such an embodiment from the viewpoint of extraction efficiency, it is expected in the above embodiment that a sufficient amount of lithium can be extracted even from a lithium-containing inorganic material other than solid wastes.

Thus, according to the present embodiment, the operation cost per unit weight of lithium extracted from lithium-containing inorganic materials (such as cost of drugs, energy cost, and cost of waste liquid treatment) can be extremely low, and battery-grade high-purity products can be obtained. Therefore, when lithium chemicals by the present embodiment are used as raw materials for producing lithium products such as lithium-ion batteries or lithium all-solid-state batteries, the carbon dioxide emissions during the production of the products can be further reduced. That is, a lithium chemical produced by the lithium chemical production method in accordance with the present embodiment, lithium-ion batteries or all-solid-state batteries
produced from the lithium chemical as a material, and electric-powered vehicles on which the batteries are mounted can have the advantage of discharging lower amounts of carbon dioxide during the production compared to conventional products.

In addition, in the present embodiment, preferable ranges are set for the amount of water to moisten a lithium-containing inorganic material and the amount of sulfuric acid to extract lithium from the inorganic material. Thus, it is possible that, within these ranges of numerical values, a plurality of combinations of numerical values that satisfy the desired lithium extraction rate exist. Therefore, by obtaining the lithium extraction results using a plurality of combinations of the amount of water and the amount of sulfuric acid for a specific inorganic material, it is possible to identify the combination of the amount of water and the amount of sulfuric acid that can extract lithium at the desired extraction rate from the specific inorganic material.

Aspects of the present invention can also be expressed as follows:
Aspect 1 of the present invention is a method for producing a lithium chemical from inorganic material containing lithium, the method including a
   step of mixing sulfuric acid with the inorganic material at normal temperature in an amount of 2.5 mass% or more with respect to the inorganic material to extract the lithium from the inorganic material into a liquid medium. With Aspect 1, it is possible to provide an extraction technique that reduces the recovery cost per unit weight of recovered lithium when recovering lithium from inorganic materials containing the lithium.
Aspect 2 of the present invention is arranged such that, in Aspect 1, a solid waste generated when a boron chemical is produced from boron-containing ore is used as the inorganic material; and in the step of extracting, the sulfuric acid in an amount of 25 mass% to 35 mass% is mixed with the solid waste at normal temperature. In Aspect 2, the minimum amount of acid is used in recovering lithium from solid wastes. This makes it possible to provide a new technique that makes it possible to reduce costs.
Aspect 3 of the present invention is arranged such that, in Aspect 1 or 2, the sulfuric acid is used in an amount of more than 26 mass% and 34 mass% or less with respect to the solid waste. Aspect 4 of the present invention is arranged such that, in one of Aspects 1 through 3, the sulfuric acid is used in an amount of 28 mass% to 33 mass%
   with respect to the solid waste. Aspect 3 is more effective from the viewpoint of sufficiently enhancing lithium recovery efficiency, and Aspect 4 is even more effective from the same viewpoint.
Aspect 5 of the present invention is arranged, in one of Aspects 1 through 4, so as to further include, before the mixing of the sulfuric acid, a step of moistening the solid waste with water. Aspect 5 is even more effective from the viewpoint of enhancing the contact between the sulfuric acid and the solid waste in the extraction step.
Aspect 6 of the present invention is arranged, in one of Aspects 1 through 5, so as to further include a step of removing, after lithium ion extraction, a solid product from a water slurry in which the sulfuric acid is mixed, and a step of bringing the liquid medium (such as water containing impurities) after the removing of the solid product into contact with an adsorbent to adsorb only the lithium ions in the liquid medium to the adsorbent. With Aspect 6, the process can proceed directly to the adsorption step without performing pH adjustment after the removal of the solid product. Thus, Aspect 5 is even more effective from the viewpoint of simplifying the step and reducing costs.
Aspect 7 of the present invention is arranged, in Aspect 6, so as to further include a step of bringing acid into contact with the adsorbent to which lithium ion have been adsorbed, so as to elute lithium ion from the adsorbent. With Aspect 7, it is possible to simultaneously perform removal of impurities by alkalization and neutralization for the prevention of corrosion of the evaporation concentration can. Thus, Aspect 7 is even more effective from the viewpoint of enhancing the quality of a lithium chemical, which is an end product, and improving production efficiency.
In addition, Aspect 7 of the present invention may further include a step of adding an alkaline agent to the obtained eluent so as to make the eluent alkaline, a step of removing an insoluble material deposited in the eluent which has been made alkaline, a step of neutralizing, to a pH of 5 to 8, the eluent from which the insoluble material has been removed, and a step of concentrating the eluent which has been neutralized. Including such steps is even more effective from the viewpoint of, for example, preventing corrosion of an apparatus, improving the purity of lithium, and suppressing an increase in costs.
Aspect 8 of the present invention is a method for producing a lithium chemical from solid
   waste generated when a boron chemical is produced from boron-containing ore, the method including, in the order stated, a step of pulverizing the solid waste in a form of lumped mass, a step of mixing water with the solid waste which has been pulverized, so as to moisten the solid waste with the water, a step of mixing sulfuric acid with the solid waste at normal temperature in an amount of 25 mass% to 35 mass% with respect to the solid waste to extract lithium from the solid waste into a liquid medium as lithium ion, a step of removing a solid product from the lithium ion extract solution, a step of bringing the lithium ion extract solution after the removing of the solid product into contact with an adsorbent to adsorb lithium ion to the adsorbent, a step of bringing acid into contact with the adsorbent to which lithium ion have been adsorbed, so as to elute lithium ion from the adsorbent to obtain an eluent, a step of adding alkali to the eluent so as to set the eluent to a pH of 6 or higher, a step of concentrating the neutralized eluent, a step of adding a carbonate compound to the concentrated liquid to deposit lithium carbonate, a step of separating, from the concentrated liquid, particles of the lithium carbonate which has been deposited and washing the particles of the lithium carbonate with a saturated aqueous lithium carbonate solution, and a step of drying the particles of the lithium carbonate which have been washed. Aspect 8 includes the steps that involve no
   calcination. Thus, Aspect 8 is even more effective from the viewpoint of enhancing the quality of a lithium chemical, which is an end product, and reducing the production costs and the total carbon dioxide emissions (LCA) in the production steps.
Aspect 9 of the present invention is arranged such that, in Aspect 8, the sulfuric acid is used at a concentration of more than 26 mass% and 34 mass% or less. Aspect 10 of the present invention is arranged such that, in Aspect 8 or 9, the sulfuric acid is used at a concentration of 28 mass% to 33 mass%. Aspect 9 is more effective from the viewpoint of sufficiently reducing the lithium recovery costs with a low amount of acid, and Aspect 10 is even more effective from the same viewpoint.
Aspect 11 of the present invention is arranged such that, in one of Aspects 6 through 10, a manganese oxide-based ion adsorbent which has been shaped into pellets is used as the adsorbent. Aspect 10 is even more effective from the viewpoint of preventing the adsorbent from flowing out of the adsorption column during liquid passage.
Aspect 12 of the present invention is arranged such that, in one of Aspects 1 through 11, the
   solid waste contains calcium in a highest amount by mass, among elements with an atomic number of 12 or higher. Aspect 12 is even more effective from the viewpoint of making it possible to use sulfuric acid that adjusts the pH of the liquid medium to an appropriate pH which does not require neutralization in the steps after the extraction step.
Aspect 13 of the present invention is arranged, in Aspect 1, so as to include a step of moistening the inorganic material with water in an amount of 100 mass% or less with respect to the inorganic material, and a step of mixing sulfuric acid with the inorganic material at normal temperature in an amount of 2.5 mass% to 35 mass% with respect to the inorganic material to extract lithium from the inorganic material into liquid medium. Aspect 13 is even more effective from the viewpoint of reducing, when recovering lithium from lithium-containing inorganic materials, the recovery cost per unit weight of the recovered lithium.
Aspect 14 of the present invention is arranged such that, in Aspect 13, the sulfuric acid is mixed with the inorganic material at normal temperature in an amount of more than 7 mass% and 13 mass% or less with respect to the inorganic material. Aspect 14 is more effective from the viewpoint of improving recovery efficiency
   and reducing recovery costs when recovering lithium from lithium-containing inorganic materials.
Aspect 15 of the present invention is arranged such that, in Aspect 13 or 14, the sulfuric acid is mixed with the inorganic material at normal temperature in an amount of 8 mass% to 12 mass% with respect to the inorganic material. Aspect 15 is even more effective from the viewpoint of improving recovery efficiency and reducing recovery costs when recovering lithium from lithium-containing inorganic materials.
Aspect 16 of the present invention is arranged such that, in one of Aspects 13 through 15, the inorganic material is moistened with the water in an amount of 20 mass% to 100 mass% with respect to the inorganic material. Aspect 16 is even more effective from the viewpoint of enhancing recovery efficiency when recovering lithium from lithium-containing inorganic materials.
Aspect 17 of the present invention is arranged such that, in one of Aspects 13 through 16, a solid waste generated when a boron chemical is produced from boron-containing ore is used as the inorganic material. Aspect 17 is even more effective from the viewpoint of enhancing
   recovery efficiency when recovering lithium from lithium-containing inorganic materials.
Aspect 18 of the present invention is a lithium chemical produced by the method according to one of Aspects 1 through 17. Aspect 18 is even more effective from the viewpoint of achieving a lithium chemical with low CO₂ in LCA.
Aspect 19 of the present invention is lithium-ion battery or an all-solid-state battery produced from the lithium chemical according to Aspect 18 as a material. Aspect 19 is even more effective from the viewpoint of achieving a battery with low CO₂ in LCA.
Aspect 20 of the present invention is an electric-powered vehicle on which the battery according to the Aspect 19 is mounted. Aspect 20 is even more effective from the viewpoint of achieving an electric-powered vehicle with low CO₂ in LCA.

The above features contribute to the profits of companies by reducing the costs of reagents and other expenses and, simultaneously, can contribute to reductions in the global environmental impact by further reductions in LCA. Furthermore, when using the product
of the present invention as a lithium chemical, CO₂ of the lithium-ion battery or the all-solid-state battery is reduced in LCA, and, in addition, CO₂ of an electric vehicle using the battery can be further reduced in LCA. The present invention, which can bring about such an effect, is expected to contribute to the achievement of, for example, Goal 13 "Take urgent action to combat climate change and its impacts" of the Sustainable Development Goals (SDGs) proposed by the United Nations.

The present invention is not limited to the embodiments described above, but may be altered in various ways by a skilled person within the scope of the claims. The present invention also encompasses, in its technical scope, any embodiment derived by combining technical means disclosed in differing embodiments.

### Examples

The following description will discuss Examples of the present invention.

### [Example 1]

### [Preparation of solid wastes]

Solid wastes were prepared from within the premises of a boron chemical manufacturing plant in
Kirka, Turkey. The solid wastes are solid or sludge-like wastes discharged as residues when boron chemicals are produced from boron-containing minerals. The lithium concentration in the solid waste is approximately 800 ppm. It should be noted that the lithium concentration in the solid waste was measured by completely dissolving 1 g of a sample in 10 mL of aqua regia, and then using an atomic absorption spectrometer with the standard addition method (n=3).

Furthermore, elemental analysis of the solid waste was performed using an analysis apparatus of energy dispersive fluorescent X-ray spectroscopy (Energy Dispersive X-ray Spectroscopy; EDX). In this analysis method, elements with an atomic number of 12 or higher are detected. The detection results are shown in Table 1. The amounts (%) in Table 1 were calculated from the amounts of elements with an atomic number of 12 or higher. Furthermore, the results of X-ray diffraction of the solid wastes are shown in Fig. 2. In Fig. 2, the vertical axis represents the relative reflection intensity, and the horizontal axis represents 2θ (where 8 is the X-ray grazing incidence angle). The relative intensities of peaks up to the 12th peak in descending order of relative intensity, among the peaks that can be read from Fig. 2, are shown in Table 2.

**[Table 1]**

| Element | Amount (%) |
|---|---|
| Ca | 68 |
| Si | 17 |
| Sr | 6.6 |
| K | 3.6 |
| Fe | 3 |
| S | 0.49 |
| Ti | 0.17 |

**[Table 2]**

| Intensity rank | 2θ (°) | Relative intensity |
|---|---|---|
| 1 | 31.23 | 250 |
| 2 | 27.25 | 150 |
| 3 | 15.89 | 100 |
| 4 | 31.76 | 70 |
| 5 | 41.41 | 70 |
| 6 | 33.91 | 60 |
| 7 | 51.37 | 46 |
| 8 | 30.21 | 40 |
| 9 | 45.24 | 40 |
| 10 | 15.12 | 34 |
| 11 | 50.84 | 33 |
| 12 | 37.66 | 30 |

Table 1 indicates that among the elements with an atomic number of 12 or higher, the amount of calcium (Ca) is the highest. Table 1 also indicates that silicon (Si) is contained in a significant amount (10% or more) and that magnesium (Mg) is not present.

In addition, Figure 2 and Table 2 indicate that the top three peaks are remarkable and characteristic.

### [Production of lithium chemical]

First, the solid wastes were
pulverized using an alumina mortar and pestle, and then sieved. The particle size of the resulting pulverized material was approximately 450 µm or less in the long diameter.

Next, 1 kg of water was added to 1 kg of the pulverized material of the solid wastes, and the resultant product was mixed and kneaded at normal temperature (20°C to 30°C) for 1 hour, so that a water slurry of the pulverized material was obtained.

Next, 0.3 kg of concentrated sulfuric acid at a concentration of 98 mass% (18 mol/L) (30 mass% with respect to the solid wastes) was gradually added to the water slurry while further kneading.

After the foaming in the water slurry subsided, additional water was added to the water slurry, and the resultant product was filtered to separate the acid-treated pulverized material and the lithium-containing filtrate from each other.

Next, additional water was added in such an amount to the separated lithium-containing filtrate that the lithium concentration became approximately 200 ppm. The pH of the diluted filtrate was measured and confirmed to be 6 or higher.

Next, the diluted filtrate was supplied to and passed through an adsorption column filled with lithium-ion adsorbent in the form of pellets (lithium adsorbent disclosed in International Publication No. WO 2011/058841) (hereinafter also referred to as "lithium-ion adsorption column"). The presence of lithium ion in the liquid discharged from the lithium-ion adsorption column was measured by the atomic absorption method. When it was confirmed that lithium ion was detected in the liquid discharged from the lithium-ion adsorption column, the supply of the diluted filtrate to the lithium-ion adsorption column was stopped.

Next, an approximately 1 mol/L (approximately 4%) aqueous hydrochloric acid solution was supplied to and passed through the lithium-ion adsorption column. The lithium ions adsorbed on the lithium-ion exchange adsorbent in the lithium-ion adsorption column were exchanged with hydrogen ions from the hydrochloric acid (elution), and an aqueous lithium chloride solution (eluent) containing the lithium chloride and the hydrochloric acid was discharged from the lithium-ion adsorption column.

Next, sodium hydroxide was added to
the eluent to neutralize the hydrochloric acid and raise the pH to 10 or higher. This caused a trace amount of calcium contained in the eluent and a trace amount of manganese dissolved from the adsorbent by the acid to be deposited. After filtering the deposits, the pH was adjusted to be 6 to 8, so that an eluent of high purity was obtained.

Next, with use of an evaporation concentration can, the eluent was concentrated until the lithium ion concentration reached 15,000 ppm or higher, so that a concentrated liquid of the lithium chloride was obtained.

Next, approximately 210 g of sodium carbonate was added per 1 L of the concentrated liquid, and the resultant product was stirred and allowed to stand, so that lithium carbonate was generated and precipitated.

Next, the precipitated lithium carbonate particles were taken out and washed with a saturated aqueous lithium carbonate solution. In this way, a purified product of lithium carbonate with a purity of 99.7% or more was obtained as a lithium chemical. In addition, the ratio of the lithium content of the purified product of lithium carbonate to the lithium content of the solid wastes was calculated to determine the rate of recovery of lithium from the solid
wastes. The result revealed that the lithium recovery rate in the present Example was 95%.

The elemental analysis results of the metallic elements in the purified product of lithium carbonate in the present Example are shown in Table 3. The remainder is lithium ions (Li⁺).

**[Table 3]**

| Ions | Amount contained (ppm) |
|---|---|
| K⁺ | Measurement limit or lower |
| Na⁺ | 408 |
| Al³⁺ | Measurement limit or lower |
| B³⁺ | 21 |
| Ca²⁺ | Measurement limit or lower |
| Mg²⁺ | Measurement limit or lower |
| Mn²⁺ | Measurement limit or lower |

Table 3 indicates that the obtained purified product of lithium carbonate has sufficiently low concentrations of impurities such as manganese, aluminum, or boron, which are undesirable as raw materials for lithium ion batteries and that the purity of the purified product is 99.7% or more. The purity of lithium carbonate required for a raw
material for lithium ion batteries is 99.5% or more. Thus, the purified product of lithium carbonate obtained in the present Example can be used as a raw material for lithium ion batteries.

### [Comparative Example 1]

Instead of concentrated sulfuric acid, a 0.25 mol/L aqueous hydrochloric acid solution was added to the water slurry of the pulverized material of the solid wastes prepared in Example 1, at 200 mL per 1 g of the pulverized material. The water slurry was mixed, kneaded, and filtered. In this way, a lithium extract solution of Comparative Example 1, in which lithium in the pulverized material was extracted was obtained.

### [Comparative Example 2]

The pulverized material of the solid wastes prepared in Example 1 was calcined at 1100°C for 2 hours. The calcined pulverized material was immersed in water in an amount of 2.7 times in terms of mass ratio and was then filtered. In this way, a lithium extract solution of Comparative Example 2 in which lithium in the calcined pulverized material was extracted was obtained.

### [Comparative Example 3]

50 g of the pulverized material of the solid wastes prepared in Example 1 was moistened with water. Then, 4.5 g of sulfuric acid (at a concentration of 98 mass%) was added, and the resultant product was mixed well. The resultant product was calcined at 750°C for 1 hour. After cooling, 100 mL of water was added, water extraction was performed, and filtration was performed. In this way, a lithium extract solution of Comparative Example 3 in which lithium in the calcined pulverized material was extracted was obtained.

The amounts of lithium in the respective lithium extract solutions of Comparative Examples 1 through 3 were quantified, and the rates of extraction of lithium from the solid wastes were determined. Table 4 shows the lithium extraction rates in Example 1 and Comparative Examples 1 through 3. It should be noted that the lithium extraction rate for Example 1 in Table 4 employs the numerical value of the above lithium recovery rate.

**[Table 4]**

| Method for extracting lithium from Clay | Lithium extraction rate (%) |
|---|---|
| Example 1 | 95 |
| Comparative Example 1 | 24 |
| Comparative Example 2 | 0.4 |
| Comparative Example 3 | 50 |

As is clear from Table 4, although calcination was not performed in Example 1, the lithium extraction rate was high.

As is clear from the comparison between Example 1 and Comparative Example 1, for extracting lithium from a pulverized material of a solid, sulfuric acid is superior to hydrochloric acid when the amount added is identical. Although the reason is unclear, it is considered as follows. That is, in Example 1, water is added to the solid waste to such an extent that the solid waste becomes a slurry, and then while concentrated sulfuric acid is gradually added, kneading is performed. Although sulfuric acid is a divalent acid, the concentration of monovalent hydrogen sulfate ion is higher than the concentration of divalent sulfate ions at pH of 1.5 or less. Therefore, by directly adding concentrated sulfuric acid to water slurry of solid wastes, a period is created during which a large amount of hydrogen sulfate ions is present in the process of diluting the
concentrated sulfuric acid with water content in the slurry. It is inferred that these hydrogen sulfate ions efficiently extract lithium ion from the solid wastes.

### [Reference Example 1]

The amount of lithium extracted into the liquid medium of the water slurry when the amount of sulfuric acid added to the water slurry in Example 1 was set to 0, 0.1, 0.2, 0.3 (Example 1), and 0.4 in terms of mass ratio of the sulfuric acid to the pulverized material was measured. The results are shown in Fig. 3.

As shown in Fig. 3, as the mass ratio of the sulfuric acid to the pulverized material increases from 0 to approximately 0.2, the lithium extraction rate increases relatively gradually. Then, as the mass ratio increases from approximately 0.2 to approximately 0.3, the lithium extraction rate increases more sharply. At a mass ratio of 0.31, the lithium extraction rate reaches 100%, and thereafter the lithium extraction rate plateaus. Fig. 3 indicates that the mass ratio of the sulfuric acid to the pulverized material is preferably in the range of approximately 0.25 to 0.35.

### [Example 2]

Using the same pulverized material of
solid wastes as in Example 1, 0.5 kg of water was added to 1 kg of the pulverized material of the solid wastes, and the resultant product was mixed and kneaded at normal temperature (20°C to 30°C) for 1 hour, so that a water slurry of the pulverized material was obtained.

Next, 0.1 kg of concentrated sulfuric acid at a concentration of 98 mass% (18 mol/L) (10 mass% with respect to the solid wastes) was gradually added to the water slurry while further kneading. The mass ratio of the sulfuric acid to the pulverized material was 0.1.

Then, under the same conditions as in Example 1, additional water was added to the water slurry and the resultant product was filtered, so that a lithium extract solution of Example 2 in which lithium in the pulverized material was extracted was obtained. The amount of lithium in the lithium extract solution was quantified, and the rate of recovery of lithium from the solid wastes was determined. The result revealed that the lithium recovery rate in the present Example was 90.4%.

### [Examples 3 and 4]

The rates of recovery of lithium from the solid wastes were determined as in Example 2, except
that the amount of sulfuric acid added to the water slurry in Example 2 was set to 0.025 and 0.05 in terms of mass ratio of the sulfuric acid to the pulverized material. The results revealed that the recovery rates were 30.6% and 67.6%, respectively.

### [Example 5]

The rate of recovery of lithium from the solid wastes was determined as in Example 2, except that 0.67 kg of water was added to 1 kg of a powder of the solid wastes to prepare a water slurry and that the amount of sulfuric acid added to the water slurry was set to 0.133 in terms of mass ratio of the sulfuric acid to the pulverized material. The result revealed that the recovery rate was 92.5%.

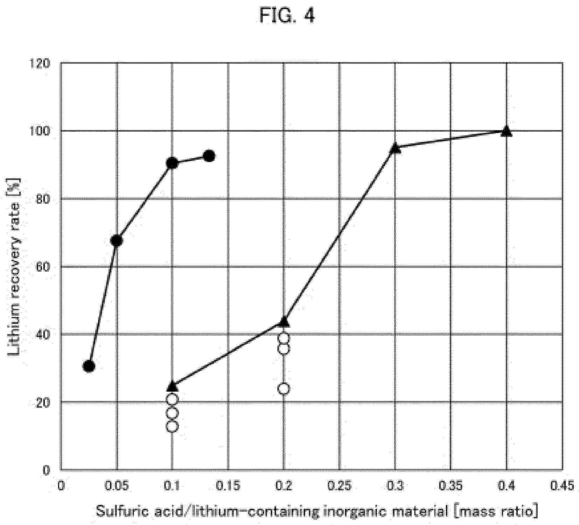

The results of Examples 2 through 5 are shown as black dots in Fig. 4. The triangular plots in Fig. 4 represent the results of Example 1 and Reference Example 1 discussed above.

In Examples 2 through 5, while the lithium recovery rate increased more sharply until the mass ratio of the sulfuric acid to the pulverized material reached 0.1, the lithium recovery rate thereafter plateaus. Therefore, it can be seen that when the amount of water used for
moistening is 50 mass%, the mass ratio of sulfuric acid to the pulverized material is preferably in the range of approximately 0.05 to 0.15. That is, in Examples 2 through 5, the amount of sulfuric acid required is less than that in Example 1, in which water and the solid wastes in the same amounts were used for moistening.

### [Examples 6 and 7]

The rate of recovery of lithium from Clay A was determined as in Example 2, except that the pulverized material of the solid wastes was changed to the pulverized material of Clay A and that water in an amount of 1.5 times in terms of mass ratio was used to moisten the pulverized material. The result is designated as Example 6. Clay A is an ore with a high lithium content collected in Turkey. In addition, the rate of recovery of lithium from Clay A was determined as in Example 6, except that water in an amount of 0.5 times in terms of mass ratio was used to moisten the pulverized material and that sulfuric acid in an amount of 0.1 and 0.2 in terms of mass ratio was used to extract the lithium in the pulverized material. The result is designated as Example 7. The lithium recovery rates were 12.8% in Example 6 and 23.9% in Example 7.

### [Examples 8 and 9]

The rate of recovery of lithium from Clay B was determined as in Example 2, except that the pulverized material of the solid wastes was changed to the pulverized material of Clay B and that water in an amount of 2 times in terms of mass ratio was used to moisten the pulverized material. The result is designated as Example 8. Clay B is an ore with a moderate lithium content collected in Turkey. In addition, the rate of recovery of lithium from Clay B was determined as in Example 8, except that water in an amount of 0.5 times in terms of mass ratio was used to moisten the pulverized material and that sulfuric acid in an amount of 0.1 and 0.2 in terms of mass ratio was used to extract the lithium in the pulverized material. The result is designated as Example 9. The lithium recovery rates were 16.8% in Example 8 and 35.7% in Example 7.

### [Examples 10 and 11]

The rate of recovery of lithium from Clay C was determined as in Example 2, except that the pulverized material of the solid wastes was changed to the pulverized material of Clay C and that water in an amount of 2 times in terms of mass ratio was used to moisten the pulverized material. The result is designated as Example 10. Clay C is an ore with a low lithium content collected in Turkey. In addition, the rate of recovery of lithium from Clay C
was determined as in Example 10, except that water in an amount of 0.5 times in terms of mass ratio was used to moisten the pulverized material and that sulfuric acid in an amount of 0.1 and 0.2 in terms of mass ratio was used to extract the lithium in the pulverized material. The result is designated as Example 11. The lithium recovery rates were 20.8% in Example 10 and 38.7% in Example 11, respectively.

The results of Examples 6 through 11 are shown as white dots in Fig. 4. It can be seen that lithium can also be extracted from the pulverized material of lithium ores. Although some variation in the recovery rate is observed, this variation is considered attributable, for example, to the fact that lithium ores are natural substances and considered to include characteristics specific to their origin. Therefore, it is expected that by further examining the conditions of moistening (amount of water) and the conditions of extraction (amount of sulfuric acid), the lithium recovery rate can be improved or optimized.

### [Example 12]

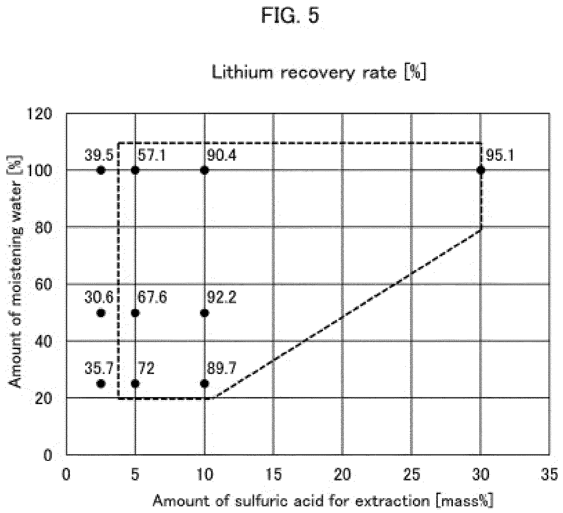

The lithium recovery rate was determined as in the above Examples, except that the amount of water to moisten the pulverized material was set to 25%, 50%, or 100% and the amount of sulfuric acid for lithium
extraction was set to 2.5%, 5%, 10%, or 30%, in terms of mass ratio to the pulverized material of the solid wastes. The results are shown in Table 5 and Fig. 5. The values in Table 5 and Fig. 5 indicate the lithium recovery rates.

**[Table 5]**

| | | Amount of water for moistening [Mass%] | | |
|---|---|---|---|---|
| | | 25 | 50 | 100 |
| Amount of sulfuric acid for extraction [Mass%] | 2.5 | 35.7 | 30.6 | 39.5 |
| | 5 | 72 | 67.6 | 57.1 |
| | 10 | 89.7 | 92.2 | 90.4 |
| | 30 | - | - | 95.1 |

As shown in Table 5, when the amount of sulfuric acid is 2.5 mass%, the lithium recovery rate tends to be low regardless of the amount of water. This is considered to be due to the insufficient amount of sulfuric acid. In addition, as the amount of sulfuric acid increases, the lithium recovery rate tends to increase. On the other hand, when the amount of water for moistening is lower, the increase in the lithium recovery rate accompanying the increase in the amount of sulfuric acid tends to plateau more
significantly. This is considered to be because the effect of enhancing the contact between the pulverized material and the sulfuric acid by the water for moistening is exhibited more remarkably when the amount of water for moistening is lower.

Since the pulverized material is a solid component derived from natural products, the composition of the pulverized material has some degree of variation. Thus, the rate of recovery of lithium from the pulverized material also has some numerical ranges. Although the results shown in Table 5 and Fig. 5 include such variations, Table 5 and Fig. 5 indicate that, for desired numerical values of the lithium recovery rate, there can be a plurality of combinations of the amount of water for moistening and the amount of sulfuric acid for extraction. Therefore, the present Example demonstrates that it is possible to select the production conditions for the lithium chemical (lithium extraction conditions) as appropriate according to the desired lithium recovery rate. For example, if the desired lithium recovery rate is 50% or more, for the pulverized material in the present Example, the amount of water for moistening and the amount of sulfuric acid for discharge may be selected as appropriate from the region enclosed by the dashed straight lines (for example, y=20, x=4, y=110, x=30, and y=3x-10) in Fig. 5. In the region, a higher lithium recovery rate
can be expected as the value approaches the right side in Fig. 5, the upper side in Fig. 5, or upper right side in Fig. 5.

The above Examples and the like clearly demonstrate that it is possible to provide a new technique which, when recovering lithium from solid wastes obtained by the inventor of the present invention, can further reduce the recovery cost per unit weight of the lithium recovered.

### Industrial Applicability

The present invention can be utilized for the widespread use of lithium chemicals and products derived therefrom, and can be applied to reduce the environmental impact associated with the production of the lithium chemicals and products derived therefrom.

## Claims

1. A method for producing a lithium chemical from inorganic material containing lithium, the method comprising
a step of mixing sulfuric acid with the inorganic material at normal temperature in an amount of 2.5 mass% or more with respect to the inorganic material to extract the lithium from the inorganic material into a liquid medium.

2. The method according to claim 1, wherein:
solid waste generated when a boron chemical is produced from boron-containing ore is used as the inorganic material; and
in the step of extracting, the sulfuric acid in an amount of 25 mass% to 35 mass% is mixed with the solid waste at normal temperature.

3. The method according to claim 2, wherein the sulfuric acid is used in an amount of more than 26 mass% and 34 mass% or less with respect to the solid waste.

4. The method according to claim 2, wherein the sulfuric acid is used in an amount of 28 mass% to 33 mass% with respect to the solid waste.

5. The method according to claim 2, further comprising, before the mixing of the sulfuric acid, a step of moistening the solid waste with water.

6. The method according to claim 2, further comprising
a step of removing a solid product by liquid-solid separation after the lithium has been extracted, and
a step of bringing the liquid medium after the removing of the solid product into contact with an adsorbent to adsorb the lithium in the liquid medium to the adsorbent.

7. The method according to claim 6, further comprising
a step of bringing acid into contact with the adsorbent to which lithium has been adsorbed, so as to elute lithium from the adsorbent to obtain an eluent,
a step of adding an alkaline agent to the eluent so as to make the eluent alkaline,
a step of removing an insoluble material deposited in the eluent which has been made alkaline,
a step of neutralizing, to a pH of 5 to 8, the eluent from which the insoluble material has been removed, and
a step of concentrating the eluent which has been neutralized.

8. A method for producing a lithium chemical from a solid waste generated when a boron chemical is produced from boron-containing ore, the method comprising, in the order stated,
a step of pulverizing the solid waste in a form of lumped mass,
a step of mixing water with the solid waste which has been pulverized, so as to moisten the solid waste with the water,
a step of mixing sulfuric acid with the solid waste at normal temperature in an amount of 25 mass% to 35 mass% with respect to the solid waste to extract lithium from the solid waste into liquid medium as lithium ion,
a step of removing solid product from mixture of the liquid medium and the solid waste,
a step of bringing the liquid medium after the removing of the solid product into contact with an adsorbent to adsorb lithium ion in liquid medium to the adsorbent,
a step of bringing acid into contact
with the adsorbent to which lithium ion has been adsorbed, so as to elute lithium ion from the adsorbent to obtain an eluent,
a step of adding alkali to the eluent so as to set the eluent to a pH of 6 or higher,
a step of concentrating the eluent which has been set to a pH of 6 or higher, so as to obtain a concentrated liquid,
a step of adding a carbonate compound to the concentrated liquid to deposit lithium carbonate,
a step of separating, from the concentrated liquid, particles of the lithium carbonate which has been deposited and washing the particles of the lithium carbonate with a saturated aqueous lithium carbonate solution, and
a step of drying the particles of the lithium carbonate which have been washed.

9. The method according to claim 8, wherein the sulfuric acid is used in an amount of more than 26 mass% and 34 mass% or less with respect to the solid waste.

10. The method according to claim 8, wherein the sulfuric acid is used in an amount of 28 mass% to 33 mass% with respect to the solid waste.

11. The method according to claim 6 or 8, wherein a manganese oxide-based ion adsorbent which has been shaped into pellets is used as the adsorbent.

12. The method according to claim 2 or 8, wherein the solid waste contains calcium in a highest amount by mass, among elements with an atomic number of 12 or higher.

13. The method according to claim 1, comprising
a step of moistening the inorganic material with water in an amount of 100 mass% or less with respect to the inorganic material, and
a step of mixing sulfuric acid with the inorganic material at normal temperature in an amount of 2.5 mass% to 35 mass% with respect to the inorganic material to extract the lithium from the inorganic material into a liquid medium.

14. The method according to claim 13, wherein the sulfuric acid is mixed with the inorganic material at normal temperature in an amount of more than 7
mass% and 13 mass% or less with respect to the inorganic material.

15. The method according to claim 13, wherein the sulfuric acid is mixed with the inorganic material at normal temperature in an amount of 8 mass% to 12 mass% with respect to the inorganic material.

16. The method according to claim 13, wherein the inorganic material is moistened with the water in an amount of 20 mass% to 100 mass% with respect to the inorganic material.

17. The method according to any one of claims 13 through 16, wherein a solid waste generated when a boron chemical is produced from a boron-containing ore is used as the inorganic material.
